# EUROPEAN PATENT APPLICATION

(11) **EP 1 900 516 A1**
(43) Date of publication of application: **19.03.2008**
(21) Application number: 07018003.9
(22) Date of filing: 13.09.2007
(51) Int. Cl.: B32B 37/06, B32B 37/00

(54) **Apparatus and method for laminating photovoltaic modules by pre-heating**

(30) Priority: 15.09.2006 JP 2006251428
(71) Applicant: Nisshinbo Industries, Inc., Chuo-ku, Tokyo 103-8650 (JP)
(72) Inventor: Makizono, Mitsuie, Miaicho Okazaki-shi Aichi 444-8560 (JP)
(74) Representative: nospat Patentanwälte

(57) **Abstract**

To provide a laminating apparatus and method that enable one to reduce the amount of warping of the workpiece (10) considerably during heating at the laminating section in comparison with conventional methods. The laminating apparatus (100) is used in the laminating method where internal filling material is melted by heating, wherein an apparatus (100) is equipped with a laminating section that has upper and lower chambers (113,121) separated by a diaphragm (112). The workpieces (10) which are ready to be transported to the laminating section described above is preheated by plural pre-heaters (250).

## Description

### FIELD OF THE INVENTION

The present invention relates to a laminating method for manufacturing laminated workpieces such as a photovoltaic module and an apparatus used in the method.

### BACKGROUND OF THE INVENTION

For conventional laminating apparatuses to manufacture photovoltaic modules, there are publicly known examples such as those described in the publications, i.e., Patent Document 1.
For the laminating apparatus in these examples, those having upper and lower chambers are used.
The upper chamber has a diaphragm that is expandable toward the lower section; the lower chamber has a heat-generating plate; and the upper and lower chambers are bound with a hinge so that the upper chamber functions as a lid for the lower chamber.

The method of using the conventional laminating apparatuses is described below.
First, with the upper chamber in an open state, a workpiece is transported on a transporting belt and placed on a heat-generating plate that is located in the above-described lower chamber. The photovoltaic module as the workpiece is constructed so that a glass plate is arranged to form a lowest layer, on which a sheet-like filling material, photovoltaic cells, and another sheet-like filling material are sequentially layered and a sheet-like backside material is arranged to form an uppermost layer. The upper and lower chambers are layered to decompress an interior of the upper and lower chambers, and the workpiece is heated. Then, by introducing air into the upper chamber only, the diaphragm is expanded and the workpiece, i.e., a photovoltaic module, is compressed between the upper surface of the heat-generating plate and the diaphragm.
The filling material is melted by the heat from the heat-generating plate, which results in a cross-linking reaction and resultant hardening of the material to complete the laminating process.

In manufacturing a photovoltaic module by using the above-described laminating apparatus, the glass plate, which is a component material, may become warped when the photovoltaic module is heated over the heater plate of the laminating section.
If the glass plate in a warped state is laminated while being compressed with the diaphragm and the upper surface of the heat generating plate under pressure, the pressure that is exerted may damage the cell material. Furthermore, when the glass plate is being warped, the entire photovoltaic module may not be evenly in contact with the heating plate, allowing partial heating only, which prevents the surface from being heated evenly, thereby causing problems such as poor lamination.

To solve such a problem, Unexamined Patent Publication No.JP-A 1998-95089 (Patent Reference 1) adopts a process in which the workpiece is subjected to a pre-heating process by a pre-heater before the workpiece is transported to the laminating section. Because the workpiece has been pre-heated by the pre-heater before it is transported to the laminating section, the temperature gradient inside the glass plate when placed on the heater plate of the laminating section is smaller than that inside the glass plate when the workpiece at a normal temperature is placed on the heater plate. Thus, the development of warping is minimized.

### SUMMARY OF THE INVENTION

However, the laminating apparatus described in Patent Reference No. 1 is associated with the following problems.

<1> When the photovoltaic module is manufactured by using the laminating apparatus, to improve the productivity, plural photovoltaic modules may often be placed on a conveyor that leads to the laminating section. Those that are pre-heated on this conveyor are transported to the laminating section for the lamination process. When the uniform temperature is applied to this conveyor for preheating, the time for heating each photovoltaic module on the conveyor varies. Thus, in contrast to the first workpieces that are transported to the laminating section, warping is more likely to develop in those about to be transported to the laminating section.

<2> When the large-sized photovoltaic modules are manufactured, the width of the conveyor to transport the workpieces will necessarily be larger; and if the temperature for pre-heating is made uniform, the effects of the temperature difference between the upper and lower surfaces of the glass plate and the augmented width of the conveyor act synergistically, resulting in the development of an upswept warping. Consequently, air layers develop between the conveyor and the lower surface of the workpiece at its both ends of the workpiece, which interferes with the transmission of the heat from the preliminary heater to the workpiece and causes uneven temperature distribution in the workpieces.

<3> In spite of preheating the workpiece before being transported to the laminating section, the temperature of its upper surface differs from that of the lower surface. Due to this temperature differential, gas is generated inside the workpiece and the resultant bubbles cause uneven temperature distribution; and incomplete melting of the filling material or partial melting before complete vacuum is achieved, thereby blocking the escape of air and generating air bubbles. Furthermore, unevenness of the temperature among these workpieces thus processed results in an uneven internal state of the products after lamination. Ultimately, the quality of the workpieces becomes unstable.

The present invention is aimed at solving these problems, and it is an object for the present invention to prevent the warping of the workpiece to be transported to the laminating section more effectively than the conventional method when photovoltaic modules are manufactured by using the laminating apparatus. In addition to the object, it is another object to provide a method and an apparatus for lamination to effectively prevent warping of the workpiece to be transported to the laminating section.

To achieve the above-described object, the laminating apparatus of this invention is an apparatus used in the laminating method for the photovoltaic devices that melts the internal filling material with heat, wherein the laminating apparatus is equipped with the laminating section having upper and lower chambers separated by the diaphragm, and workpieces, which are ready to be transported to said laminating section, are preheated by plural pre-heaters.

The apparatus may be constructed to individually control the temperature of the above-described plural pre-heaters, to control the temperature of plural pre-heaters in such a manner that the temperature becomes high at both ends of the workpiece in the direction of the width relative to the direction of transporting the workpiece and low at the center thereof, and to control the temperature of plural pre-heaters in such a manner that the temperature becomes low toward the direction of transporting the workpiece.

Furthermore, in addition to the laminating apparatus with the above-described construction, among plural workpieces that are ready to be transported to the laminating section, the temperature of the workpiece to be transported to the laminating section immediately may be confirmed by the sensor; the sensors may confirm the temperature of all workpieces that are ready to be transported to the laminating section to be transported to the laminating section; and the laminating apparatus may be equipped with the means to insulate the workpieces that are ready to be transported to the laminating section.

Furthermore, to achieve the above-described object, the laminating method of this invention is a method for melting the internal filling material of the photovoltaic devices through heating by the laminating apparatus, wherein the laminating apparatus is equipped with the laminating section having upper and lower chambers that are separated by the diaphragm; and plural pre-heaters pre-heat workpieces that are ready to be transported to the laminating section.

The workpieces are pre-heated by the pre-heater in a transport conveyor before they are transported to the laminating section.
Meanwhile the temperature of the plural pre-heaters is individually controlled; the temperature thereof becomes higher at both ends in the direction of the width of the workpieces and lower at the center thereof; and it is controlled so that it may be lower from the entry of the transport conveyor toward the entry to the laminating section in the direction of transport by the conveyor.
Through this apparatus, the development of warping of the workpieces during heating in the laminating section is markedly reduced in comparison with conventional method.
By correcting the warping of the workpieces in the laminating section, the problem of damage to the workpieces during the laminating process is eliminated.

Furthermore, as the workpieces are transported to the laminating section while under precise temperature control over the transport conveyor by the above-described preheating means, the need to leave extra time for heating time during the laminating process is obviated, thus shortening the time allowed for laminating process.

In addition, as the workpieces are transported to the laminating section under precise temperature control over the transport conveyor by the above-described preheating means, the internal state of each workpiece is maintained generally stable while being laminated, thus stabilizing its quality after laminating process.

### BRIEF DESCRIPTION OF THE DRAWINGS

FIG. 1 is an overall view of the laminating apparatus of the present invention;

FIG. 2 is a cross section view showing the structure of the photovoltaic module as the workpiece 10;

FIG. 3 is a cross section view showing the laminating section 101 of the laminating apparatus;

FIG. 4 is a view showing the state in which laminating process is conducted in the apparatus of FIG. 3;

FIG. 5 is a front view of an embodiment of arranging plural pre-heaters 250;

FIG. 6 is a plan view of an arrangement of plural pre-heaters 250;

FIG. 7 is an explanation view of the pre-heaters 250;

FIG. 8 is an explanation view of the temperature control by plural pre-heaters 250;

FIG. 9 is a view showing another embodiment of arrangement of plural pre-heaters 250;

FIG. 10 is a view showing another embodiment of arrangement of plural pre-heaters 250;

FIG. 11 is a view showing the state in which a sensor confirming temperature is arranged on the import conveyor 200; and

FIG. 12 is a view showing the construction of an insulating means for the workpiece 10 that is ready to be transported on the import conveyor 200

### DESCRIPTION OF THE PREFERRED EMBODIMENTS

Embodiments of the present invention are explained below with reference to the accompanying drawings.

### <1> Photovoltaic Module

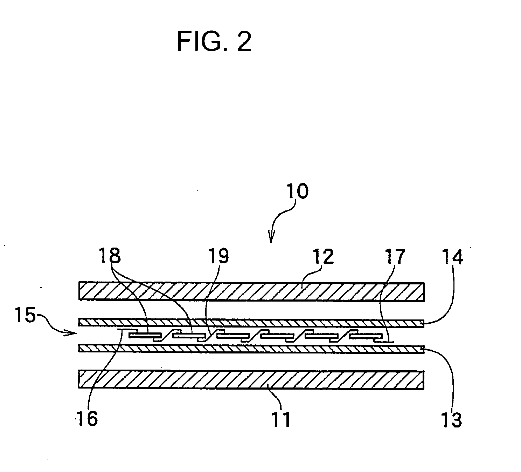

First, an embodiment of a workpiece 10 to be processed by a laminating apparatus and a laminating method of the present invention is explained. FIG. 2 is a cross section view showing a structure of a photovoltaic module as an example of workpiece 10. As indicated in the figure, the photovoltaic module has a structure where a string 15 is sandwiched by filling materials 13 and 14 between a transparent cover glass 11 that is arranged at the lower side and a back material 12 that is arranged at the upper side. For the back material 12, a transparent substance, such as polyethylene resin, can be used. For filling materials 13 and 14, a substance such as EVA (ethylene vinyl acetate) resin can be used. A string 15 is constructed by connecting photovoltaic cells 18 between electrodes 16 and 17 via lead wires 19. Alternatively for the workpiece 10, photovoltaic devices that are commonly called a thin film-type may be used. In a typical structure for a thin film-type, a power generation element composed of a transparent electrode, a semiconductor and a back surface electrode is vapor-deposited on a transparent cover glass arranged on the lower side. This type of thin film-type photovoltaic module is formed by performing vacuum heating laminate as facing the glass toward the lower side, coving the photovoltaic element on the glass with the filling material, and further covering the filling material with the back surface material. The thin film-type photovoltaic module, as the workpiece 10, has a sealing structure that is basically identical to the photovoltaic devices composed of the crystal-based cells except that the crystal-based cells is replaced by a vapor-deposited power generation element.

### <2> Overall Structure

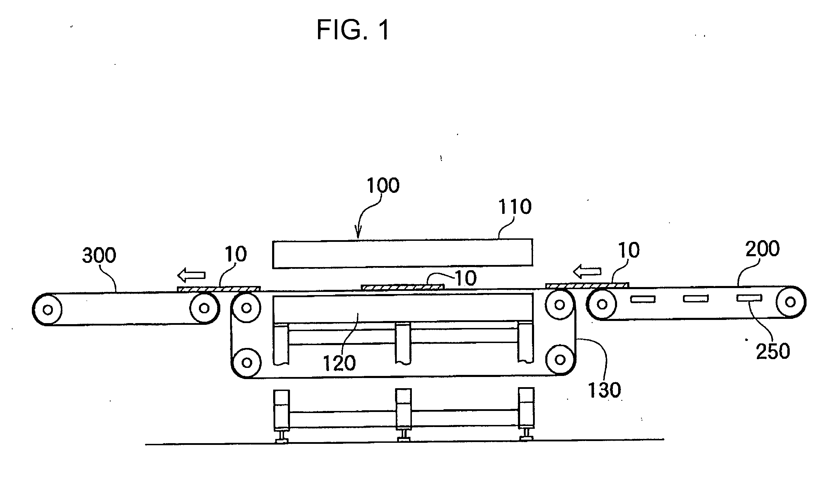

FIG. 1 is a front view of a laminating apparatus 100 of the present invention. An import conveyor 200 is located at the right side of the laminating apparatus 100 shown in the same figure, and an export conveyor 300 is located at the left side thereof. The import conveyor 200 supplies the photovoltaic modules as the workpiece 10 for lamination to the laminating section, while the export conveyor 300 carries out the laminated workpiece 10. Then, the workpiece 10 is carried out to the left of FIG. 1 via a sequence of the import conveyor 200, the laminating apparatus 100, and the export conveyor 300. A transport belt 130 is installed in the laminating apparatus 100 to receive the workpiece 10 from the import conveyor 200 and transfer the same to the export conveyor 300.

### <3> Laminating Section

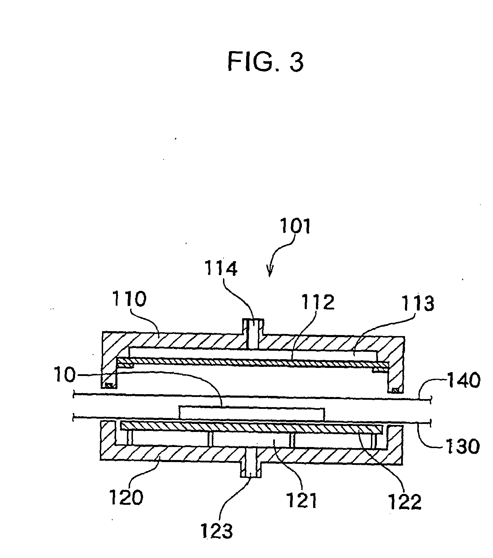

FIG. 3 is a cross section view of the laminating section 101. A diaphragm 112 is arranged to divide inside an upper case 110 horizontally. The space surrounded by this diaphragm 112 and the inner wall surface of upper case 110 forms an upper chamber 113. For the diaphragm 112, a material such as a heat-resistant rubber (e.g., fluorine-based rubber) can be used.
On the upper surface of upper case 110, an air intake and exhaust opening 114 that is connected to the upper chamber 113 is situated. This air intake and exhaust opening 114 is connected to a vacuum pump (not shown in the figure) so that the air in the upper chamber 113 may be pulled to the vacuum. It is connected to the outside so that atmospheric pressure may be introduced to the upper case.

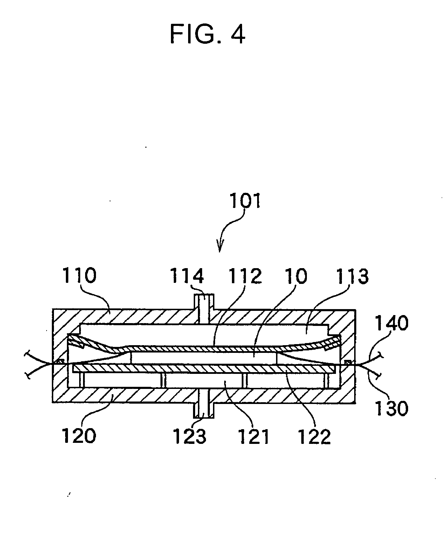

A plate-like heater 122 is arranged in a lower chamber 121 as an internal space of lower case 120. As shown in FIGS. 3 or 4, a heater 122 is supported by supporting bodies in the bottom section of the lower chamber 121.

The air intake and exhaust opening 123 is situated at the lower surface of the lower case 120 so as to be connected to the lower chamber 121.
The lower chamber 121 is sealed by the upper case 110 at its top and is constructed so that the chamber may be pulled to the vacuum by exhausting through the air intake and exhaust opening 123 or atmospheric pressure may be introduced to the lower chamber 121 through this air intake and exhaust opening 123.

### <4> Laminating Process

The workpiece 10 is laminated in the following manner. The workpieces 10 are transported while the transport belt 130 is being operated, which is stopped as reaching the laminating position. The upper case 110 is closed and fitted over the lower case 120, and the air intake and exhaust opening 114 and 123 are connected to a vacuum pump so as to reduce the pressure in the space in upper chamber 113 and the lower chamber 121. Meanwhile the heater 122 is heated and contacted to the workpiece 10 with pressure via the transport belt 130. When the required vacuum level is achieved and the heater reaches the required temperature, air is introduced into the upper chamber 113.

As shown in FIG. 4, the diaphragm 112 expands downward, pressing the workpiece 10 with a force against the heater 122. The workpiece 10 is heated by the heater 122 and filling materials 13 and 14 in the workpiece 10 are melted.

When the laminating process is completed, air is introduced into lower chamber 121 to raise the pressure to the atmospheric level. Then, the upper case 110 is opened.
The conveyor belt 130 is being operated to transport the workpiece 10 to the left in FIG. 1, and when the workpiece reaches the exit of the laminating apparatus, it is carried out by the export conveyor 300. When the workpiece has been carried out, the import conveyor 200 delivers the next workpiece 10 and the above-described procedure is repeated.

### <5> Problem Associated With Heating during Processing

When the workpiece 10 is transported to the laminating section 101 for laminating process, the filling material inside the workpiece 10 is heated to a range of 120 to 180°C by a heater. It is known that a glass plate often warps at the periphery during this heating process. When this occurs, the distance between the heater 122 used in the laminating process and the workpiece 10 varies between the center and periphery. Consequently, in spite of heating at identical temperatures by the heaters 122 during the laminating process, a temperature differential develops between the center and at periphery. When the temperature differential develops inside a single workpiece 10, the EVA resin melts unevenly. Such a situation generates a problem of incomplete exhaustion of gases from the inside. Furthermore, performing laminating process, as the diaphragm 112 applying the sandwiching pressure with the existence of warping, may not only damage the cell but also lead to breakage of the end section of thin workpiece 10.

When the workpiece 10 is transported to the laminating section 101 for lamination, the instability of the temperature of the workpiece 10 before arriving at this section may alter the time required for cross-linking and curing of the filling material through heating during the laminating process, thereby making the internal condition unstable and the quality of the product uneven.

### <6> Installing Pre-heaters 250 for Preheating

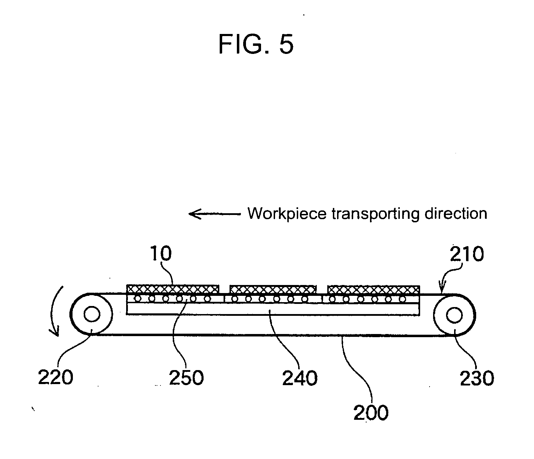

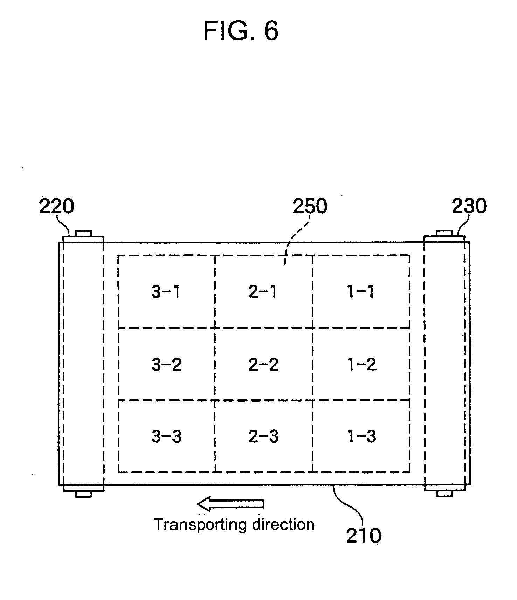

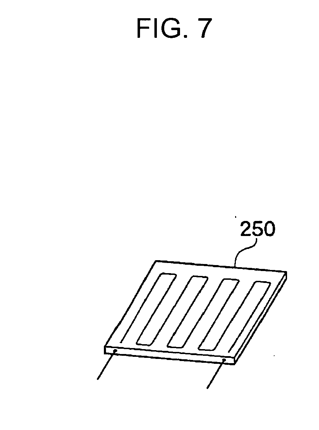

In the present invention, therefore, plural pre-heaters 250 are arranged in the import conveyor 200 transporting the workpiece 10 that is ready to be transported to the laminating section 101, as indicated in FIGS. 5 and 6. Each preheating heaters 250 is shaped as shown in FIG. 7, which is an impedance-type heater containing a nichrome wire inside. The temperature is set up by controlling the current, voltage, and the calorific value of these pre-heaters 250. The heating temperature of the pre-heaters 250 is set to be considerably lower than heating temperature of a main heater 122 of the laminating section. In the present invention, the pre-heaters 250 are arranged on a support 240 in the import conveyor 200, and there are a total of nine pieces with three pieces in the width direction of the workpiece 10 and three pieces in the transport direction of the workpiece 10. However, the quantity of the pre-heaters 250 arranged here is not limited to the above-described example, and it may be determined according to the size of the workpiece 10, the quantity of the workpiece 10 that are placed on the import conveyor 200 and other conditions. With the actions of the driving rollers 220 and 230, the heat-resistant transport belt 210 runs over the pre-heaters 250. The workpiece 10 is placed on this transport belt 210 and heated by the pre-heaters 250 while the temperature is being controlled. The pre-heaters 250 do not always have to be located at the lower surface of the import conveyor 200, and other heating means such as a hot air or an infrared heater may be arranged at the upper space.

### <7> Arrangement of Temperature Differentials in the Direction of Width

Plural pre-heaters 250 are arranged in the direction of width: the temperature of each pre-heater 250 of FIG. 6 (from 1-1 to 3-3) is set up in such a manner that the temperature of each pre-heater 250 at both ends in the direction of the width of the import conveyor 200 is high and the temperature of each pre-heater 250 at the center is low. Plural pre-heaters 250 are arranged in the direction of width and the temperature differential is given between those at the center and the both ends. The reason for this construction is as follows. If the temperature for preheating is made uniform in the direction of width of the conveyor that transports the workpieces in manufacturing photovoltaic modules, the temperature difference of the lower and upper surfaces of the glass plate results in the development of upward warping. Consequently, at both ends of the workpiece, an air layer is formed between the import conveyor and the lower surface of the workpiece, which interferes with the transmission of the heat from the pre-heaters and results in uneven distribution of the temperature inside the workpiece. In the present invention, therefore, plural pre-heaters 250 are arranged in the direction of the width when heated from below and the temperature of pre-heaters 250 at each ends is set up high while that of pre-heaters 250 at the center is set up low so that the temperatures will be distributed evenly inside the workpiece 10 even if the workpiece warps upward. Furthermore, by arranging plural pre-heaters 250 and setting up the temperature of the pre-heaters 250 at both ends high and that at pre-heaters 250 at the center low, the temperature of the internal filling material can be distributed uniformly during the preheating. Consequently, the time required for the filling material to be uniformly melted during the laminating process can be shortened. Also, the cross-linking rate of the internal filling material for the photovoltaic devices that is laminated becomes uniform, thereby stabilizing the quality of the photovoltaic devices.

### <8> Arrangement of Temperature Differential in the Direction of Transport

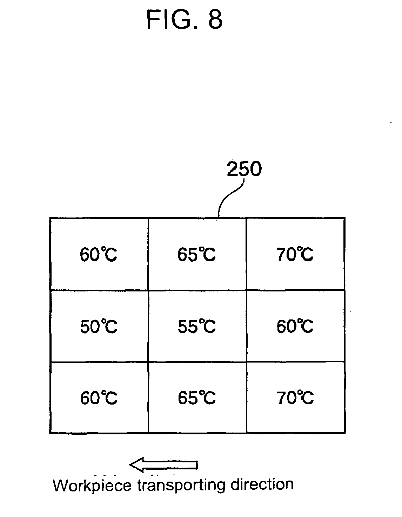

Plural pre-heaters 250 may be arranged to the direction of transport of the workpiece 10 and the temperature of the pre-heaters 250 of the entry of the import conveyor 200 at which the workpiece 10 is loaded may be set up high, while the temperature of pre-heaters 250 at the side of laminating section 101 may be set up low. In other words, as shown in FIG. 8, the temperature of plural pre-heaters 250 is set higher at the positions away from laminating section 101 and lower at more proximate to laminating section. By setting the temperature in this manner, it becomes possible to raise the temperature of the workpiece 10, store the calorie there, and then reduce the temperature gradually thereafter. In this manner, the temperature differential in each workpiece 10 is eliminated, and such workpiece 10 may be transported to the laminating section 101 at a generally identical temperature. Needless to add, the upper bound of the temperature is set up so that even the maximum temperature is below the melting point of the components of the workpiece 10.

### <9> Temperature Differential Inside Pre-heaters

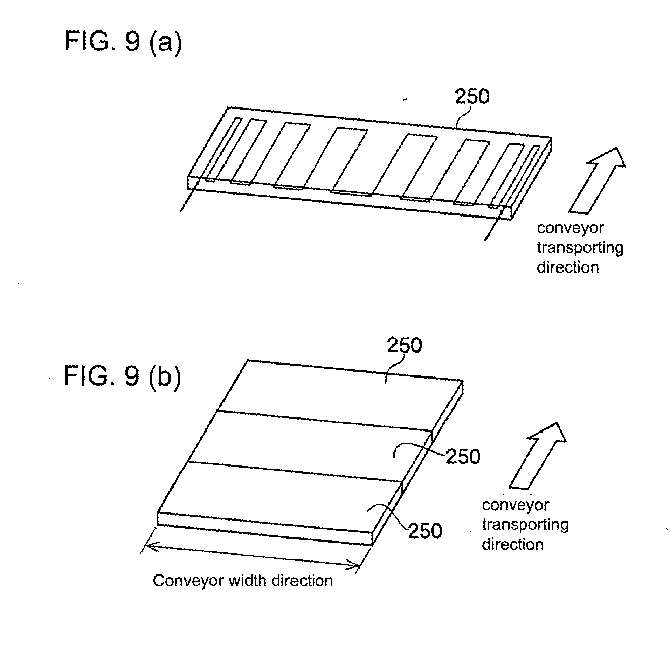

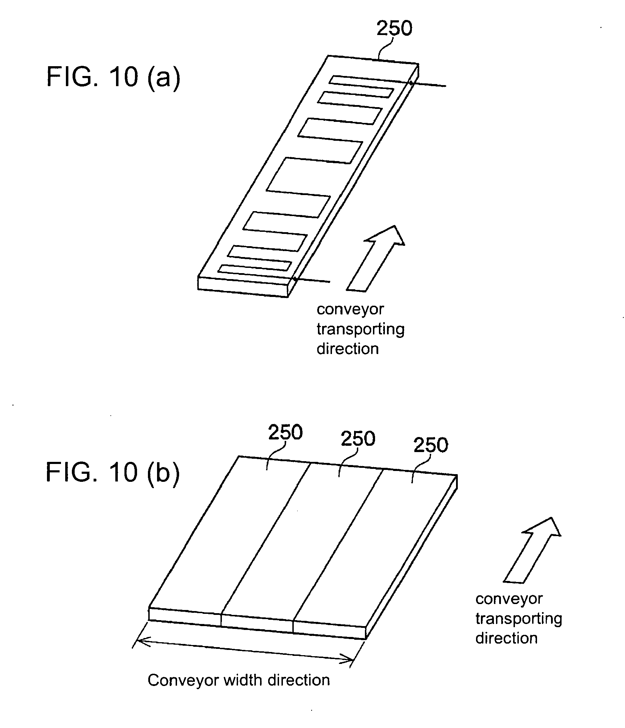

The structure for the pre-heaters 250 is not limited to the case where the nichrome wire runs back and forth at even intervals as shown in FIG. 7, and the wire may be arranged with irregular spacing as shown seen in FIGS. 9 (a) and 10 (a). Specifically, according to FIG. 9 (a), a single sheet of pre-heater 250 is formed in the direction of the width of the import conveyor 200, and the nichrome wire inside heater 250 is arranged so that it has closer spacing pattern together at both ends and wider spacing pattern together at the center.
By arranging three pieces of these pre-heaters 250 in the direction of transport in import conveyor 200 as shown in FIG. 9 (b), the temperature of the workpiece 10 is controlled. FIG. 10 (a) shows the following construction: a single sheet of pre-heater 250 is formed in the direction of the transport of the import conveyor 200, and the nichrome wire inside heater 250 is arranged from a closer spacing pattern to a wider spacing pattern as it approaches from the side where the workpiece 10 is loaded to the side of laminating section 101.
By arranging three pieces of these pre-heaters 250 in the direction of the width of import conveyor 200 as in FIG. 10 (b), the temperature of the workpiece is controlled. FIGS. 9 (b) and 10 (b) show examples in which three pieces pre-heaters 250 are arranged. By increasing the quantity of pre-heaters 250 further, the temperature may be controlled more precisely in the direction of the width of the import conveyor 200 or in the direction of transport of the workpiece.

### <10> Temperature Sensor 260

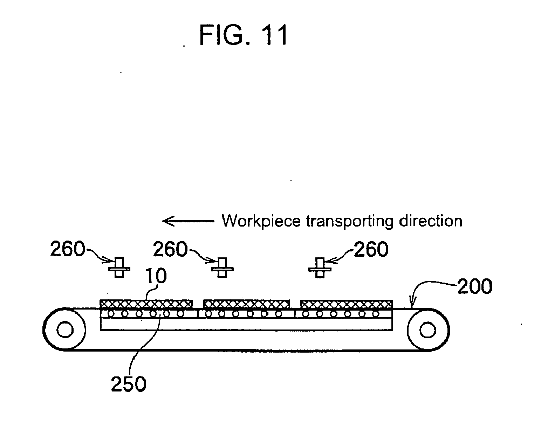

Among the workpieces 10 which are ready to be transported to the laminating section on the import conveyor 200, it is important to maintain a constant temperature of the workpiece 10 to be immediately transported to the laminating section 101 to improve the quality of the workpiece 10 after the lamination. Therefore, in addition to controlling the temperature of pre-heaters 250 as described above, it is possible to add a temperature sensor 260 to confirm the temperature of the workpiece 10. For the temperature sensor 260, known types such as those that detect temperature with infrared rays may be used. As shown in FIG. 11, the temperature sensor 260 is arranged in the upper space of the workpiece 10 that is placed on the import conveyor 200: when the workpiece 10 is heated by pre-heaters 250 of which the temperature is set up accordingly, the sensor confirms the temperature of the workpiece 10 and based on the result, the temperature setting of the pre-heaters 250 is altered. The temperature sensor 260 may be used specifically for the workpiece 10 immediately before it is transported to the laminating section 101, but it is desirable to install it for all workpieces 10 that are placed on the import conveyor 200. By detecting the temperature of all workpieces 10 by the temperature sensor 260, the temperature may be controlled based not only on the workpiece 10 which is immediately transported to the laminating section 101 but also on the workpiece 10 that is ready to de transported to laminating section. Thus, the precision of temperature control is further improved. Consequently, the internal condition of the workpiece 10 after lamination is stabilized, improving the quality further.

### <11> Thermal Insulation of the Workpiece

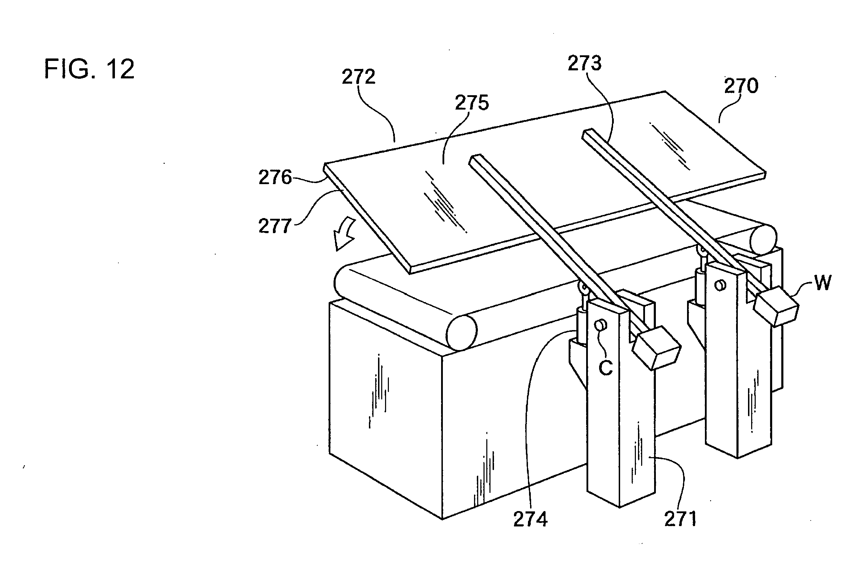

In addition, to improve the quality of the workpiece 10 after laminating, it is important that the temperature difference not only between the upper and lower surfaces but also between the periphery and the central region of the workpiece 10 that is ready to be transported on the import conveyor 200 are reduced and the temperature becomes uniform throughout the workpiece 10. Thus, in addition to controlling the temperature setting of the pre-heaters 250 as described above, it is possible to add an insulating means to the workpiece 10 to the import conveyor 200. By covering the upper surface of the workpieces 10 that are placed on the import conveyor 200 with an insulating sheet, the overall temperature of the workpiece 10 may be kept uniform. One example is explained with reference to FIG. 12. A base 271 of an insulating means 270 is arranged on either end in the direction of the width of the import conveyor 200. The insulating cover 272 is connected to two arms 273, which are constructed to rotate, rise, and descend around the rotating center C with the aid of two air cylinders 274. A counterweight W in this figure is for the rotating, rising, and descending of the insulating cover 272. This insulating cover 272 descends during the laminating process or when the workpiece 10 is transported to the laminating section 101. This cover rotates and rises when the workpiece 10 is transported to the laminating section 101, and another workpiece 10 is placed on the import conveyor 200. The insulating cover 272 is comprised of the cover plate 275, which is made of a light-weight material, such as aluminum, and Teflon (registered trade mark) sheet 276. A Teflon (registered trade mark) sheet 276 covers the surface that faces the workpiece 10. An insulating material 277, made of a material such as glass wool, is used to fill the space between Teflon (registered trade mark) sheet 276 and the cover plate 275. By covering the upper surface of the workpiece 10 with the insulating cover 272 of a construction described above, the heat that is applied by the pre-heaters 250 is effectively transmitted inside the workpiece 10 and the temperature is uniformly distributed throughout workpiece 10. Furthermore, it is possible to arrange a heater on the insulating means 270. The structure is not limited to the one shown in FIG. 12, and a construction such as an insulating space formed by merely placing an enclosure around the upper space may be adopted.

### <12> Insulating Means and Sensor

Although the following description is not shown in the figure, a structure may be adopted in which the above-described insulating means 270 and the temperature sensor 260 that is explained with the aid of FIG. 11 can be used together. When arranging temperature sensor 260, such sensors corresponding to the quantity of the workpieces 10 may be arranged on a part such as the cover plate 275. The method of installing these is not limited to the method described above.
By this method, the thermal condition is stabilized at each workpieces 10 when the workpiece 10 is transported to the laminating section 101, further improving the accuracy of the uniformity of the overall temperature of the workpiece 10.

## Claims

1. A laminating apparatus used in a laminating method for a photovoltaic devices that melts an internal filling material with heat, **characterized in that**
said laminating apparatus is equipped with a laminating section having upper and lower chambers separated by a diaphragm,
and workpieces, which are ready to be transported to said laminating section, are preheated by plural pre-heaters.

2. The laminating apparatus of Claim 1, **characterized in that**
said laminating apparatus individually controls the temperature of said plural pre-heaters.

3. The laminating apparatus of Claims 1, **characterized in that**
said laminating apparatus controls the temperature of said plural pre-heaters in such a manner that the temperature becomes high at both ends of the workpiece in a direction of a width relative to a direction of transporting said workpiece and low at a center thereof.

4. The laminating apparatus of Claims 1, **characterized in that**
said laminating apparatus controls the temperature of said plural pre-heaters in such a manner that the temperature becomes low toward a direction of transporting said workpiece.

5. The laminating apparatus of Claims 1, **characterized in that**
said plural workpieces are ready to be transported to the laminating section.

6. The laminating apparatus of Claim 5, **characterized in that**
among plural workpieces that are ready to be transported to the laminating section, the temperature of the workpiece to be transported to the laminating section immediately is confirmed by a sensor.

7. The laminating apparatus of Claim 5, **characterized in that**
sensors confirm the temperature of all workpieces that are ready to be transported to the laminating section, and said workpieces are transported to the laminating section.

8. The laminating apparatus of Claims 1, **characterized in that**
said laminating apparatus is equipped with a means to insulate the workpieces that are ready to be transported to the laminating section.

9. A laminating method for melting an internal filling material of a photovoltaic devices through heating by a laminating apparatus, **characterized in that**
said laminating apparatus is equipped with a laminating section having upper and lower chambers that are separated by a diaphragm;
and plural pre-heaters pre-heat workpieces that are ready to be transported to the laminating section.
